# EUROPEAN PATENT SPECIFICATION

(11) **EP 3 246 422 B1**
(45) Date of publication and mention of the grant of the patent: **12.12.2018**
(21) Application number: 16737261.4
(22) Date of filing: 06.01.2016
(51) Int. Cl.: C22C 29/02, C22C 1/05, B22F 3/10, B22F 5/00

(54) **CERMET, CUTTING TOOL, AND METHOD FOR MANUFACTURING CERMET**
CERMET, SCHNEIDEWERKZEUG UND VERFAHREN ZUR CERMET-HERSTELLUNG
CERMET, OUTIL DE COUPE ET PROCÉDÉ PERMETTANT LA FABRICATION DE CERMET

(30) Priority: 16.01.2015 JP 2015007283; 03.04.2015 JP 2015076541
(43) Date of publication of application: 22.11.2017
(73) Proprietor: Sumitomo Electric Industries, Ltd., Osaka-shi, Osaka 541-0041 (JP)
(72) Inventor: YAMANISHI, Takato, Itami-shi Hyogo 664-0016 (JP); TSUDA, Keiichi, Itami-shi Hyogo 664-0016 (JP)
(74) Representative: Boult Wade Tennant LLP
(86) International application number: PCT/JP2016/050218
(87) International publication number: WO 2016/114190

(56) References cited:
- EP-A1- 3 130 685
- EP-A1- 3 130 686
- JP-A- H06 220 559
- JP-A- 2000 073 136
- JP-A- 2000 073 136
- JP-A- 2010 144 249
- JP-A- 2010 222 650
- JP-A- 2015 203 116
- JP-B2- 3 227 774

## Description

### Technical Field

The present invention relates to a cermet suitable for a constituent material of a cutting tool, to a cutting tool using the cermet, and to a method for producing the cermet. More particularly, the present invention relates to a cermet suitable for a constituent material of a cutting tool having excellent fracture resistance even in a severe cutting environment.

### Background Art

A hard material called cermet has been used for main bodies (substrates) of conventional cutting tools. A cermet includes: a main hard phase composed of a Ti compound such as titanium carbide (TiC), titanium nitride (TiN), or titanium carbonitride (TiCN); and a binder phase containing an iron group metal element such as cobalt (Co) or nickel (Ni) and binding the hard phase. Cermets have the following advantages over cemented carbides including tungsten carbide (WC) as a main hard phase: [1] The amount of W used, which is a scarce resource, can be reduced. [2] Wear resistance is high. [3] The machined surface of steel subjected to cutting is beautiful. [4] They are lightweight. However, a problem with the cermets is that they have lower strength and toughness than cemented carbides and are susceptible to thermal shock, so that their machining applications are limited.

To enhance the fracture resistance, wear resistance, etc. of a cermet to thereby improve its cutting performance, PTL 1, for example, discloses sizing of hard phase particles included in the cermet. PTL 2 discloses a base powder with a uniform particle size, and PTL 3 discloses a highly-purified base powder.

The sizing of the hard phase particles in PTL 1 is achieved as follows. A base powder for forming the hard phase that has a controlled particle size and a base powder for forming a metal binder phase are prepared and mixed, and the powder mixture is subjected to press molding. Then sintering is performed in a nitrogen atmosphere of 1 Torr (≈ 0.133 kPa) at 1,400°C × 1 hour.

The base powder with a uniform particle size in PTL 2 is obtained as follows. In the step of mixing a titanium oxide base powder and a carbon base powder, at least one of Co and Ni is added in an amount of 0.1 to 0.3% by weight with respect to a titanium carbonitride powder to be obtained, and the powder mixture is subjected to heat treatment at 1,500°C to 1,750°C.

The highly-purified base powder in PTL 3 is obtained as follows. A titanium oxide base powder and a carbon base powder are mixed uniformly, and the mixture is held in hydrogen gas or nitrogen gas with a controlled pressure of 20 to 40 kPa at a temperature of 1,800°C to 2,000°C and then subjected to heat treatment at a pressure of 5 kPa for deoxidation.

PLT 4 relates to a method for producing a cermet.

### Citation List

### Patent Literature

PTL 1: Japanese Unexamined Patent Application Publication No. 2000-073136
PTL 2: Japanese Unexamined Patent Application Publication No. 2003-027114
PTL 3: Japanese Unexamined Patent Application Publication No. 2006-298681
PTL 4: Japanese Unexamined Patent Application Publication No. 2010-222650

### Summary of Invention

### Technical Problem

Although the effect of improving the cutting performance was found in the conventional cermet cutting tools, the effect is still insufficient. Particularly, there is a need for a further improvement in fracture resistance. There is also a need for a reduction in product-to-product variations in life due to unexpected fracture of tools

The present invention has been made in view of the foregoing circumstances, and one object of the present invention is to provide a cermet suitable for a constituent material of a cutting tool having excellent fracture resistance even in a severe cutting environment.

Another object of the present invention is to provide a cermet suitable for a constituent material of a cutting tool that can be prevented from unexpectedly fracturing, so that product-to-product variations in fracture resistance are small.

Still another object of the present invention is to provide a cutting tool using any of the above cermets as a substrate.

Yet another object of the present invention is to provide a cermet production method capable of producing any of the above cermets.

### Solution to Problem

A cermet according to one embodiment of the present invention includes a hard phase containing Ti and a binder phase containing at least one of Ni and Co and binding the hard phase. In an observation field of view containing at least 200 hard phase particles in any given cross section of the cermet, at least 70% by number of the hard phase particles present in the observation field of view have a particle diameter within ±30% of the average particle diameter of the hard phase particles, and wherein the average particle diameter of the hard phase particles is from 1.0 µm to 1.5 µm inclusive.

A cutting tool according to one embodiment of the present invention uses the cermet as a substrate.

A cermet production method according to one embodiment of the present invention includes a preparing step, a mixing step, a molding step, and a sintering step. In the preparing step, a first hard phase base powder, a second hard phase base powder, and a binder phase base powder are prepared. The first hard phase base powder contains at least one of Ti carbide, Ti nitride, and Ti carbonitride. The second hard phase base powder contains at least one selected from W, Mo, Ta, Nb, and Cr. The binder phase base powder contains at least one of Co and Ni. In the mixing step, the first hard phase base powder, the second hard phase base powder, and the binder phase base powder are mixed using an attritor to produce a powder mixture. In the molding step, the powder mixture is molded to produce a green compact. In the sintering step, the green compact is sintered. The first hard phase base powder is prepared using Ti oxide as a starting material, has an average particle diameter of from 0.5 µm to 5.0 µm inclusive, and has a particle size distribution with a standard deviation of 1.5 µm or less, and in the sintering step, the green compact is heated to from 1.300°C to 1.500°C inclusive in a nitrogen atmosphere with a nitrogen partial pressure of from 5.0 kPa to 10.0 kPa inclusive.

### Advantageous Effects of Invention

The above cermet is suitable for a constituent material of a cutting tool having excellent fracture resistance even in a severe cutting environment.

The above cutting tool has excellent fracture resistance even in a severe cutting environment.

The above cermet production method is capable of producing a cermet that can provide a cutting tool having excellent fracture resistance even in a severe cutting environment.

### Brief Description of Drawing

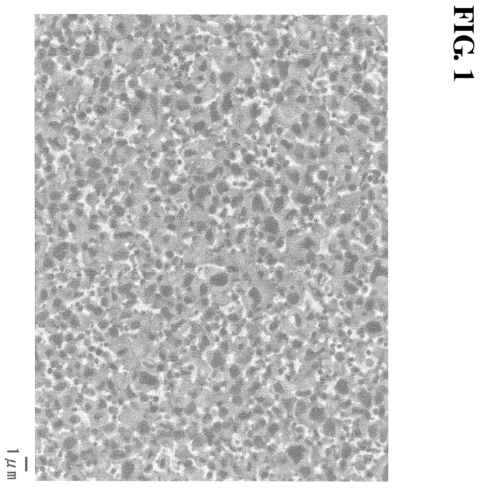

[Fig. 1] Figure 1 shows a scanning electron microscope photograph of a cermet according to one embodiment of the present invention.

### Description of Embodiments

### <Description of embodiments of the present invention>

First, the contents of the embodiments of the present invention will be enumerated and described.
(1) A cermet according to an embodiment includes a hard phase containing Ti and a binder phase containing at least one of Ni and Co and binding the hard phase. In an observation field of view containing at least 200 hard phase particles in any given cross section of the cermet, at least 70% by number of the hard phase particles present in the observation field of view have a particle diameter within ±30% of the average particle diameter of the hard phase particles, and wherein the average particle diameter of the hard phase particles is from 1.0 µm to 1.5 µm inclusive.
   In the above structure, the hard phase particles in the cermet are substantially uniform in size. This allows concentration of stress on the hard phase particles to be mitigated, and the formation of fracture origins during fracture can be reduced, so that the fracture resistance can be improved. Therefore, excellent fracture resistance can be obtained even in a severe cutting environment such as intermittent cutting at a high cutting speed or a high feed rate.
   When the average particle diameter of the hard phase particles is 1.0 µm or more, a certain fracture toughness can be obtained. When the average particle diameter is 1.5 µm or less, sufficient hardness can be obtained. Generally, as the hard phase particles are reduced in size, the wear resistance of the cermet obtained becomes high, but the fracture resistance of the cermet becomes low. As described above, the hard phase particles in the cermet in the present embodiment are substantially uniform in size, and this allows an improvement in fracture resistance. In addition, the average particle diameter of the hard phase particles is comprised between 1.0 µm and 1.5 µm . Therefore, the cermet can have improved wear resistance and excellent fracture resistance.
(2) In an example of the cermet, the hard phase may include a first hard phase, a second hard phase, and a third hard phase described below. The first hard phase is a hard phase having a cored structure including a core portion and a peripheral portion surrounding the entire circumference of the core portion. The core portion is composed mainly of at least one of TiC, TiN, and TiCN, and the peripheral portion is composed of a complex compound solid solution containing Ti and at least one of W, Mo, Ta, Nb, and Cr. The second hard phase is a hard phase having a single phase structure composed mainly of at least one of TiC, TiN, and TiCN. The third hard phase is a hard phase having a single phase structure composed of the above-described complex compound solid solution.
   The first hard phase, the second hard phase, and the third hard phase coexist in the hard phase, so that the hard phase can have the functions of these hard phases. Specifically, the presence of high-hardness hard phases (mainly the first and second hard phases) allows high wear resistance, and the presence of hard phases (mainly the second and third hard phases) highly wettable to the binder phase allows good wettability to the binder phase to be maintained and allows the formation of a structure in which the binder phase is distributed uniformly, so that the fracture resistance can be improved. The presence of hard phases (mainly the third hard phase) having good thermal properties allows heat conductivity to be improved, so that the occurrence of thermal cracking can be suppressed and welding resistance can be improved. Therefore, in a cutting tool using the cermet in the present embodiment, wear and fracture are less likely to occur, so that the tool life can be stabilized and extended. In addition, since welding is less likely to occur, a beautiful machined surface can be obtained, and an improvement in the quality of the machined surface of the workpiece is expected. The function of each of the phases will be described later.
(3) A cutting tool according to an embodiment includes the cermet according to any one of (1) and (2) above, the cermet being used as a substrate.
   With this structure, excellent fracture resistance is obtained even in a severe cutting environment. This is because the hard phase particles are substantially uniform in size, so that the cermet described above is excellent in fracture resistance. No particular limitation is imposed on the form of the cutting tool. Examples of the form of the cutting tool include indexable inserts, drills, and reamers.
(4) In an example of the cutting tool, the cutting tool may further include a hard film covering at least part of the surface of the substrate.
   When the substrate is covered with the hard film, the wear resistance of the substrate can be improved while the toughness and transverse rupture strength of the substrate are maintained. When the substrate is covered with the hard film, chipping of the cutting edge of the substrate is less likely to occur, so that the machined surface of a workpiece can be in a good condition. Examples of the hard film include ceramic and hard carbon films.
(5) A method for producing a cermet according to one embodiment of the present invention includes a preparing step, a mixing step, a molding step, and a sintering step. In the preparing step, a first hard phase base powder, a second hard phase base powder, and a binder phase base powder are prepared. The first hard phase base powder contains at least one of Ti carbide, Ti nitride, and Ti carbonitride. The second hard phase base powder contains at least one selected from W, Mo, Ta, Nb, and Cr. The binder phase base powder contains at least one of Co and Ni. In the mixing step, the first hard phase base powder, the second hard phase base powder, and the binder phase base powder are mixed using an attritor to produce a powder mixture. In the molding step, the powder mixture is molded to produce a green compact. In the sintering step, the green compact is sintered. The first hard phase base powder is prepared using Ti oxide as a starting material, has an average particle diameter of from 0.5 µm to 5.0 µm inclusive, and has a particle size distribution with a standard deviation of 1.5 µm or less, and in the sintering step, the green compact is heated to from 1.300°C to 1.500°C inclusive in a nitrogen atmosphere with a nitrogen partial pressure of from 5.0 kPa to 10.0 kPa inclusive.

With the above configuration, a cermet that can provide a cutting tool having excellent fracture resistance even in a severe cutting environment can be produced. The cermet produced can be prevented from unexpectedly fracturing, so that product-to-product variations in fracture resistance are small. This is because the use of the above-described first hard phase base powder allows production of a cermet that gives a high average value of transverse rupture strength and small product-to-product variations in transverse rupture strength because of the following (i) to (iii).
(i) The hard phase particles can be easily made substantially uniform in size. This is because the first hard phase base powder having the above-described average particle diameter and a very small standard deviation is used. Therefore, concentration of stress on the hard phase particles is mitigated, and the formation of fracture origins during fracture can be reduced.
(ii) The binder phase base powder can be easily bound to the first hard phase base powder firmly during sintering. Since Ti oxide is used as the starting material of the first hard phase base powder, the first hard phase base powder can be obtained without strong pulverization. Therefore, the first hard phase base powder can easily have a smooth surface texture. The smooth surface texture of the first hard phase base powder allows the binder phase to show good wettability to the first hard phase base powder during sintering.
(iii) Since the alloy structure of the cermet can be easily made substantially uniform, concentration of stress on the hard phase particles is mitigated, and the formation of fracture origins during fracture tends to be reduced. This is because the standard deviation of the first hard phase base powder is reflected in the particle size distribution of the hard phase particles in the cermet.

With the above configuration, a dense cermet including hard phase particles substantially uniform in size can be easily produced.

The reason that the hard phase particles can be easily made substantially uniform in size is as follows. When the nitrogen partial pressure is 5.0 kPa or higher, Ostwald ripening of the particles included in the first hard phase base powder can be suppressed, so that the growth of relatively large particles can be suppressed and shrinkage of relatively small particles can be suppressed. When the sintering temperature is 1,500°C or lower, the growth of the particles included in the first hard phase base powder can be easily suppressed. The reason that a dense cermet can be easily formed is that the sintering is performed at a high sintering temperature of 1,300°C or higher.

### <Details of the embodiments of the present invention>

The details of the embodiments of the present invention will next be described.

### [Cermet]

The cermet in an embodiment includes a hard phase, a binder phase for binding the hard phase, and inevitable impurities. Examples of the inevitable impurities include oxygen and metal elements of the order of ppm that are contained in the raw materials or mixed during the production process. One main feature of the cermet is that the hard phase particles in the cermet are substantially uniform in size.

### [Hard phase]

### (Composition)

The hard phase contains a compound of at least one metal element selected from group 4, 5, and 6 metals in the periodic table and at least one of carbon (C) and nitrogen (N), i.e., contains at least one selected from carbides, nitrides, and carbonitrides of the above metal elements, and solid solutions thereof. Particularly, the cermet in the present embodiment is a TiCN-based cermet containing at least Ti carbonitride (TiCN) and a carbonitride solid solution including Ti. Preferably, the hard phase includes three types of hard phases with different compositions, i.e., a first hard phase, a second hard phase, and a third hard phase. The existence forms of these hard phases can be easily distinguished by their gray levels in a micrograph taken under a scanning electron microscope (SEM). The composition of each of the hard phases can be determined by quantitative analysis using an SEM-EDX system (SEM: Scanning Electron Microscope, EDX: Energy-dispersive X-ray Spectroscopy).

### <First hard phase>

The first hard phase is a hard phase having a cored structure including a core portion and a peripheral portion surrounding the entire circumference of the core portion. The core portion is composed mainly of at least one of TiC, TiN, and TiCN. For example, the core portion may be composed substantially only of a Ti compound. In particular, the core portion may be composed substantially only of TiCN. Specifically, the core portion may contain TiCN in an amount of 80% by mass or more and particularly 90% by mass or more. The content of Ti in the core portion may be 60% by mass or more and particularly 70% by mass or more. The peripheral portion is composed of a complex compound solid solution of Ti and at least one metal selected from group 4, 5, and 6 metals other than Ti in the periodic table. In particular, the peripheral portion may be composed of a complex compound solid solution (complex carbonitride solid solution) including Ti and at least one of W, Mo, Ta, Nb, and Cr. Examples of the specific composition of the peripheral portion include (Ti, W)CN, (Ti, W, Mo)CN, (Ti, W, Nb)CN, and (Ti, W, Mo, Nb)CN. The content of Ti in the peripheral portion may be 10% by mass or more and particularly 20% by mass or more. The total content of W, Mo, Ta, Nb, and Cr in the peripheral portion may be 40% by mass or more and particularly 50% by mass or more. In the first hard phase, the peripheral portion highly wettable to the binder phase is present over the entire circumference of the core portion having high hardness. This can reduce the formation of pores in the cermet and allows its structure to be homogenized, so that the hardness can be stabilized. Since the binder phase is uniformly present in the structure, the fracture resistance can be improved. Therefore, the presence of the first hard phase in the cement allows in particular the wear resistance and fracture resistance to be improved.

### <Second hard phase>

The second hard phase is a hard phase having a single phase structure composed mainly of at least one of TiC, TiN, and TiCN. For example, the second hard phase may be composed substantially only of a Ti compound. In particular, the second hard phase may be composed substantially of TiCN. Specifically, the second hard phase contains TiCN in an amount of 80% by mass or more and particularly 90% by mass or more. The content of Ti may be 60% by mass or more and particularly 70% by mass or more. Since the second hard phase contains a larger amount of Ti than the first hard phase, the hardness of the second hard phase is high, and its reactivity with steel generally used as a workpiece is low. Therefore, the presence of the second hard phase in the cermet allows in particular wear resistance and adhesion resistance to be improved.

### <Third hard phase>

The third hard phase is a hard phase having a single phase structure composed of a complex compound solid solution of Ti and at least one metal selected from group 4, 5, and 6 metals other than Ti in the periodic table. In particular, the third hard phase may be composed of a complex compound solid solution (complex carbonitride solid solution) containing Ti and at least one of W, Mo, Ta, Nb, and Cr. Examples of the specific composition of the third hard phase include (Ti, W)CN, (Ti, W, Mo)CN, (Ti, W, Nb)CN, and (Ti, W, Mo, Nb)CN. The content of Ti in the third hard phase may be 10% by mass or more and particularly 20% by mass or more. The total content of W, Mo, Ta, Nb, and Cr in the third hard phase may be 40% by mass or more and particularly 50% by mass or more. In particular, when the third hard phase contains W, the fracture toughness is expected to be improved while high hardness is maintained. Although the hardness of the third hard phase is slightly low, the hardness is uniform, so that propagation of cracks in the hard phase is less likely to occur. When W is contained, high thermal conductivity is obtained. Therefore, the presence of the third hard phase in the cermet allows in particular the fracture resistance and heat cracking resistance to be improved.

### (Particle diameter)

One main feature of the cermet in the present embodiment is that, in an observation field of view containing at least 200 hard phase particles in any given cross section of the cermet, at least 70% by number of the hard phase particles present in the observation field of view have a particle diameter within ±30% of the average particle diameter of the hard phase particles (within a particle diameter setting range). Specifically, in the cermet in the present embodiment, the hard phase particles are substantially uniform in size. Since the hard phase particles in the cermet are substantially uniform in size, concentration of stress on the hard phase particles can be mitigated, and the formation of fracture origins during fracture can be reduced, so that the fracture resistance can be improved. Accordingly, excellent fracture resistance can be obtained even in a severe cutting environment such as intermittent cutting at a high cutting speed or a high feed rate. When the hard phase particles in the cermet are more uniform in size, the fracture resistance can be further improved. Therefore, the number ratio of hard phase particles within the particle diameter setting range to all the hard phase particles is preferably 75% or more and more preferably 80% or more. The narrower the design particle diameter range, the more uniform the size of the hard phase particles in the cermet. Therefore, at least 70% by number of the hard phase particles have a particle diameter preferably within ±25% of the average particle diameter of the hard phase particles and more preferably within ±20% of the average particle diameter of the hard phase particles.

In the present embodiment, the diameters of hard phase particles are determined in an observation field of view containing at least 200 hard phase particles in a given cross section (a SEM micrograph) of the cermet. Specifically, an image of the observation field of view is subjected to image analysis, and the average of the horizontal Feret diameter and vertical Feret diameter of a hard phase particle in the cross-sectional image is used as the diameter of the hard phase particle. The average particle diameter of the hard phase particles is determined as follows. The horizontal Feret diameter and vertical Feret diameter of each of the hard phase particles in the cross-sectional image of the observation field of view are measured. The averages of the Feret diameters of the hard phase particles are summed up, and the sum is divided by the number of measured hard phase particles. The larger the number of hard phase particles in the observation field of view, the more preferable. The number of hard phase particles is preferably 250 or more and more preferably 300 or more. A plurality of (e.g., three) observation fields of view may be used, and the average in the plurality of observation fields of view may be used.

The average particle diameter of the hard phase particles is from 1.0 µm to 1.5 µm inclusive. When the average particle diameter of the hard phase particles is 1.0 µm or more, a certain fracture toughness can be obtained. When the average particle diameter is 1.5 µm or less, sufficient hardness can be obtained. Generally, as the hard phase particles are reduced in size, the wear resistance of the cermet obtained becomes high, but the fracture resistance of the cermet becomes low. In the cermet in the present embodiment, the particle size is substantially uniform, and this allows an improvement in fracture resistance, as described above. In addition, the average particle diameter of the hard phase particles is comprised between 1.0 µm and 1.5 µm. Therefore, the cermet can have improved wear resistance and excellent fracture resistance.

### [Binder phase]

The binder phase contains at least one of Ni and Co and is used to bind the hard phase. The binder phase is composed substantially of at least one of Ni and Co but may contain the constituent elements (Ti, W, Mo, Ta, Nb, Cr, C, N) of the hard phase and inevitable impurities.

### [Operational advantage of cermet]

In the cermet described above, the hard phase particles in the cermet are substantially uniform in size. Therefore, the cermet can have excellent fracture resistance even in a severe cutting environment such as intermittent cutting at a high cutting speed or a high feed rate.

### [Cutting tool]

### [Substrate]

The above-described cermet can be used for the substrate of a cutting tool. The cermet has excellent fracture resistance even in a severe cutting environment and is therefore suitable for the material of the substrate of a cutting tool. No particular limitation is imposed on the form of the cutting tool, and example of the form of the cutting tool include indexable inserts, drills, and reamers.

### [Hard film]

The substrate may include a hard film covering at least part of its surface. When the substrate is covered with the hard film, the wear resistance of the substrate can be improved while the transverse rupture strength of the substrate is maintained. When the substrate is covered with the hard film, chipping of the cutting edge of the substrate is less likely to occur, so that the machined surface of a workpiece can be in a good condition. The portion of the substrate that is covered with the hard film is preferably at least the cutting edge and its vicinity, and the entire surface of the substrate may be covered.

The hard film may be a single layer film or a multilayer film. The thickness of the hard film (the total thickness for a multilayer film) is preferably 1 to 20 µm. To form the hard film, a chemical vapor deposition method (CVD method) such as a thermal CVD method or a physical vapor deposition method (PVD method) such as an arc ion plating method may be used.

The composition of the hard film may be at least one selected from the group consisting of cubic boron nitride (cBN), diamond, diamond-like carbon (DLC), compounds of at least one element selected from the group consisting of aluminum (Al), silicon (Si), and group 4, 5, and 6 metals in the periodic table and at least one element selected from the group consisting of carbon (C), nitrogen (N), oxygen (O), and boron (B), i.e., carbides, nitrides, oxides, and borides of the above metals etc., and compounds composed of solid solutions thereof. Specific examples of the film material include TiCN, Al₂O₃, (Ti, Al)N, TiN, TiC, and (Al, Cr)N.

### [Operational advantage of cutting tool]

In the above-described cutting tool, the above-described cermet is used for the substrate, so that the cutting tool has excellent fracture resistance even in a severe cutting environment. Therefore, the cutting tool can be preferably used not only for continuous cutting but also for intermittent cutting in a severer environment than that in the continuous cutting.

### [Method for producing cermet]

The method for producing the cermet in the present embodiment includes the preparing step, the mixing step, the molding step, and the sintering step. In the preparing step, the first hard phase base powder, the second hard phase base powder, and the binder phase base powder are prepared. In the mixing step, the powders prepared in the preparing step are mixed to produce a powder mixture. In the molding step, the powder mixture is molded to produce a green compact. In the sintering step, the green compact is sintered. Main features of the cermet production method are that the first hard phase base powder is prepared using a specific starting material, has an average particle diameter within a specific range, and has a particle size distribution with a small standard deviation.

### [Preparing step]

The mixing ratio of the first hard phase base powder, the second hard phase base powder, and the binder phase base powder prepared in the preparing step may be appropriately selected according to the intended properties of the cermet. For example, the mass ratio of the first hard phase base powder : the second hard phase base powder may be 4:1 to 1:1, and the mass ratio of these hard phase base powders : the binder phase base powder may be 9:1 to 7:1.

### (First hard phase base powder)

The first hard phase base powder contains at least one of Ti carbide (TiC), Ti nitride (TiN), and Ti carbonitride (TiCN). For example, the use of TiCN powder is suitable for the formation of the above-described first hard phase and second hard phase in the cermet.

The average particle diameter of the first hard phase base powder may be from 0.5 µm to 5.0 µm inclusive. When the average particle diameter of the first hard phase base powder is 0.5 µm or more, the transverse rupture strength tends to be enhanced, and the fracture resistance tends to be improved. In addition, the first hard phase base powder is easy to handle. When the average particle diameter of the first hard phase base powder is 5.0 µm or less, the hardness tends to be increased, and the wear resistance can be increased. The average particle diameter of the first hard phase base powder may be 0.7 µm or more and particularly 1.0 µm or more and may be 3.0 µm or less, 2.0 µm or less, 1.5 µm or less, and particularly 1.4 µm or less.

The average particle diameter of the first hard phase base powder is a particle diameter determined by a Fisher method. The average particle diameter of the first hard phase base powder is different from the average particle diameter of the hard phase particles in the cermet. The particles included in the first hard phase base powder are pulverized through the mixing step and molding step described later. This also applies to the second hard phase base powder and the binder phase base powder described later.

The standard deviation of the particle size distribution of the first hard phase base powder may be 1.5 µm or less. This standard deviation has an influence on the particle size distribution of the hard phase particles in the cermet to be obtained. When the standard deviation is 1.5 µm or less, the hard phase particles generated can have a substantially uniform size distribution. Specifically, the use of this powder allows the alloy structure of the cermet to be easily made substantially uniform. Therefore, a cermet that gives excellent fracture resistance, a high average value of transverse rupture strength, and small product-to-product variations in transverse rupture strength can be easily obtained. This allows easy production of a cutting tool that has excellent fracture resistance even in a severe cutting environment and can be prevented from unexpectedly fracturing, so that product-to-product variations in fracture resistance are small. The smaller the standard deviation, the more uniform the size of the hard phase particles to be formed. The standard deviation is preferably 1.0 µm or less and more preferably 0.5 µm or less. The standard deviation of the first hard phase base powder is a value determined by particle size distribution measurement using a Microtrac method. This also applies to Ti oxide powder described later.

To produce the first hard phase base powder, Ti oxide may be used as a starting material. When Ti oxide is used as the starting material, the first hard phase base powder can be obtained without strong pulverization. Therefore, the first hard phase base powder can easily have a smooth surface texture. The smooth surface texture of the first hard phase base powder allows the binder phase to show good wettability to the first hard phase base powder during sintering. Therefore, the hard phase and the binder phase can be easily bound to each other firmly, and a cermet that gives a high average value of transverse rupture strength and small product-to-product variations in transverse rupture strength can be easily obtained. This allows easy production of a cutting tool that can be prevented from unexpectedly fracturing, so that product-to-product variations in fracture resistance are small. Specifically, the first hard phase base powder is produced by mixing the Ti oxide powder and a carbon powder and then subjecting the powder mixture to heat treatment.

The Ti oxide powder may have an average particle diameter of from 0.5 µm to 5.0 µm inclusive and a particle size distribution with a standard deviation of 1.5 µm or less. The average particle diameter and standard deviation of the starting material are substantially reflected in the average particle diameter of the first hard phase base powder and the standard deviation of its particle size distribution. Specifically, when the Ti oxide powder has an average particle diameter of from 0.5 µm to 5.0 µm inclusive and a standard deviation of 1.5 µm or less, a first hard phase base powder having an average particle diameter of from 0.5 µm to 5.0 µm inclusive and a standard deviation of 1.5 µm or less is obtained.

The average particle diameter of the carbon powder may be appropriately selected according to the average particle diameter of the Ti oxide and may be, for example, from 0.3 µm to 1.0 µm inclusive. The ratio of the carbon powder may be, for example, from 8% by mass to 11% by mass inclusive, with the total of the carbon powder and the Ti oxide being 100% by mass.

The above heat treatment may be performed under the conditions of a nitrogen atmosphere from 1,500°C to 1,800°C inclusive for from 0.5 hours to 5.0 hours inclusive. The temperature may be from 1,500°C to 1,650°C inclusive, and the treatment time may be from 0.5 hours to 1.5 hours inclusive. When the heat treatment temperature is 1,500°C or higher and the treatment time is 0.5 hours or longer, the Ti oxide and the carbon powder can be reacted sufficiently to produce the first hard phase base powder (e.g., TiCN powder). When the heat treatment temperature is 1,800°C or lower and the treatment time is 1.5 hours or shorter, the growth of the particles of the first hard phase base powder (e.g., TiCN powder) to be obtained is likely to be suppressed, and TiCN powder in which the average particle diameter and standard deviation of the starting material are maintained can be produced.

### (Second hard phase base powder)

The second hard phase base powder may contain at least one metal selected from group 4, 5, and 6 metals (except for Ti) in the periodic table, specifically at least one selected from W, Mo, Ta, Nb, and Cr. The second hard phase base powder may be present in the form of a compound of at least one of the above metals and at least one element of carbon (C) and nitrogen (N) (e.g., carbonate powder, carbonitride powder, or solid solution powder). The use of the above-described TiCN powder in combination with the carbonate powder or carbonitride powder of any of the group 4, 5, and 6 metals (except for Ti) in the periodic table, solid solution powder, etc. is suitable for the formation of the first hard phase and the third hard phase in the cermet.

The average particle diameter of the second hard phase base powder is preferably from 0.5 µm to 3.0 µm inclusive and may be 2.0 µm or less and particularly 1.0 µm or less. When the average particle diameter of the second hard phase base powder is 0.5 µm or more, the transverse rupture strength tends to be enhanced, and the fracture resistance tends to be improved. In addition, the second hard phase base powder is easy to handle. When the average particle diameter of the second hard phase base powder is 3.0 µm or less, the hardness tends to be increased, and the wear resistance can be increased.

### (Binder phase base powder)

The binder phase base powder forms the binder phase in the above-described cermet. The binder phase base powder contains at least one iron group metal selected from Co and Ni. The average particle diameter of the binder phase base powder is preferably from 0.5 µm to 3.0 µm inclusive and may be 2.0 µm or less and particularly 1.0 µm or less. When the average particle diameter of the binder phase base powder is 0.5 µm or more, the binder phase can be easily distributed between the hard phase particles in the cermet during sintering, so that the binder phase can be firmly bonded to the hard phase. When the average particle diameter of the binder phase base powder is 3.0 µm or less, the spacing between the hard phase particles tends not to increase during sintering, so that a dense cermet can be easily produced.

### [Mixing step]

In the mixing step, the first hard phase base powder, the second hard phase base powder, and the binder phase base powder are mixed using a mixer such as an attritor to produce a powder mixture. During mixing, a molding aid (such as paraffin) may be added as needed.

The attritor is a mixer including a rotating shaft and a plurality of stirring rods protruding in the circumferential direction of the rotating shaft. The peripheral speed (rotation speed) of the attritor may be from 100 m/min to 400 m/min inclusive, and the time of mixing may be from 1.5 hours to 15 hours inclusive. When the peripheral speed of the attritor and the mixing time are within the prescribed ranges, the base powders are mixed sufficiently, so that the formation of binder phase pools and an aggregate phase in the cermet can be suppressed. Preferred values of the mixing conditions are: a peripheral speed of the attritor of from 200 m/min to 300 m/min inclusive and a mixing time of from 1.5 hours to 5 hours inclusive. The mixing in the attritor may be performed using ball-shaped media made of cemented carbide or without using media.

### [Molding step]

In the molding step, the powder mixture is filled into a mold and subjected to press molding to produce a green compact. The pressing pressure may be appropriately changed according to the composition of the base powders and may be, for example, from 50 MPa to 250 MPa inclusive. The pressing pressure is more preferably from 90 MPa to 110 MPa inclusive.

### [Sintering step]

In the sintering step, the above-produced green compact is sintered to produce a sintered body. In this sintering step, it is preferable to perform stepwise sintering. For example, the sintering performed may include a molding aid removing period, a first temperature increasing period, a second temperature increasing period, a holding period, a first cooling period, and a second cooling period.

The molding aid removing period is a period in which temperature is increased to the volatilization temperature of the molding aid and the green compact is heated to, for example, from 350°C to 500°C inclusive.

In the first temperature increasing period, the green compact is heated in a vacuum atmosphere to from about 1,200°C to about 1,300°C inclusive. The temperature increasing rate in the first temperature increasing period is, for example, from about 2°C/minute to about 20°C/minute inclusive.

In the second temperature increasing period, the green compact is heated to from about 1,300°C to about 1,500°C inclusive in a nitrogen atmosphere of from 5.0 kPa to 10.0 kPa inclusive. The temperature increasing rate in the second temperature increasing period is, for example, from about 2°C/minute to about 20°C/minute inclusive.

A main feature of the cermet production method in the present embodiment is that, in the second temperature increasing period, the temperature is increased at a high nitrogen partial pressure of from 5.0 kPa to 10.0 kPa inclusive. If the nitrogen partial pressure is less than 5.0 kPa, denitrification tends to occur during sintering, so that the relative amount of carbon tends to become large. When the amount of carbon is large, liquid phase-appearing temperature becomes low, and the time of exposure to the liquid phase becomes long, so that dissolution-reprecipitation due to Ostwald ripening is facilitated. In this case, large particles grow and form coarser particles, and small particles shrink and form finer particles. In particular, the peripheral portion of the first hard phase and the third hard phase tend to grow when the amount of nitrogen is small (the amount of carbon is large). This causes the particles to be non-uniform in size. When the nitrogen partial pressure is 5.0 kPa or more, the Ostwald ripening described above can be suppressed. Therefore, in the sintered body (cermet) obtained through the sintering step with the nitrogen partial pressure set to 5.0 kPa or higher, the hard phase particles is substantially uniform in size. If the nitrogen partial pressure is 10.0 kPa or more, the effect of suppressing the growth of the particles is not obtained.

When the sintering temperature in the second temperature increasing period is 1,300°C or higher, a dense sintered body (cermet) is obtained. If the sintering temperature is excessively high, the particles included in the base powders, particularly the particles included in the first hard phase base powder, grow easily, and the size distribution of the hard phase particles in the sintered body (cermet) obtained tends to be wide, so that the hard phase particles may be non-uniform in size. Therefore, when the standard deviation of the first hard phase base powder is 1.5 µm or less, low sintering temperature is preferred. The sintering temperature is preferably 1,400°C or lower and more preferably 1,350°C or lower.

In the holding period, the green compact is held at the final temperature in the second temperature increasing period for from 0.5 hours to 3 hours inclusive. When the holding time is 0.5 hours or longer, denitrification during sintering can be easily suppressed. When the holding time is 3 hours or shorter, the growth of the particles included in the first hard phase base powder can be suppressed.

In the first cooling period, the resulting compact is cooled to from about 1,000°C to about 1,300°C inclusive in a vacuum atmosphere. The cooling rate in the first cooling period may be, for example, from about 2°C/minute to about 20°C/minute inclusive. When the cooling rate to the above temperature range is 2°C/minute or more, the growth of the hard phase particles can be easily suppressed. When the cooling rate to the above temperature range is 20°C/minute or less, the cermet tends to have a smooth surface texture.

In the second cooling period, the compact is cooled under pressure to room temperature in a nitrogen atmosphere. The cooling rate in the second cooling period may be, for example, from about 2°C/minute to about 100°C/minute inclusive. When the cooling rate in the second cooling period is 2°C/minute or more, a dense cermet can be easily produced. When the cooling rate in the second cooling period is 100°C/minute or less, exudation of the binder phase can be easily suppressed.

The sintered body (cermet) obtained by the above-described cermet production method is fine-grained because the Ostwald ripening and growth of the particles in the base powders during the production process can be suppressed, and the hard phase particles are substantially uniform in size.

### [Operational advantage of cermet production method]

In the above-described cermet production method, the first hard phase base powder used is prepared using Ti oxide as the starting material, has an average particle diameter of from 0.5 µm to 5.0 µm inclusive, and has a particle size distribution with a standard deviation of 1.5 µm or less. In this case, the hard phase particles in the cermet tend to be substantially uniform in size. In addition, the binder phase base powder can be easily bound to the first hard phase base powder firmly during sintering, and the particle size of the first hard phase base powder can be easily maintained. Therefore, a cermet can be produced in which concentration of stress on the hard phase particles can be mitigated and the formation of fracture origins during fracture can be reduced. The cermet that can be produced gives a high average value of transverse rupture strength and small product-to-product variations in transverse rupture strength. Therefore, the cermet that can be produced allows a cutting tool having excellent fracture resistance even in a severe cutting environment to be obtained. In addition, the cermet that can be produced allows production of a cutting tool that can be prevented from unexpectedly fracturing, so that product-to-product variations in fracture resistance are small.

### <Test example 1>

Cermets were actually produced, and the composition, structure, particle size, toughness, and hardness of each of the cermets were examined.

### [Samples 1 to 8 and 101 to 103]

Cermets of samples 1 to 8 and 101 to 103 were produced through the preparing step, the mixing step, the molding step, and the sintering step in this order.

### [Preparing step]

### (First hard phase base powders)

TiCN: 0.7 to 1.4 µm and TiC: 1.2 µm were prepared as first hard phase base powders. The average particle diameter was measured by the Fisher method. The same average particle diameter measurement method was used for second hard phase base powders and binder phase base powders. The TiCN powders used had standard deviations shown in Table 1. The standard deviations were determined by particle size distribution measurement using the Microtrac method. The same standard deviation measurement method was used for Ti oxide powder in test example 4 described later.

### (Second hard phase base powders)

WC powder, Mo₂C powder, NbC powder, TaC powder, and Cr₃C₂ powder were prepared as second hard phase base powders. The average particle diameters of the prepared powders were WC: 1.2 µm, Mo₂C: 1.2 µm, NbC: 1.0 µm, TaC: 1.0 µm, and Cr₃C₂: 1.4 µm.

### (Binder phase base powders)

Co powder and Ni powder were prepared as binder phase base powders. The average particle diameters of the prepared powders were Co: 0.7 µm and Ni: 2.6 µm.

### [Mixing step]

A first hard phase base powder, a second hard phase base powder, and a binder phase base powder were mixed at one of mass ratios shown in Table 1, and ethanol serving as a solver and paraffin serving as a molding aid were further mixed using an attritor to thereby produce a slurry-like raw material mixture. The amount of the paraffin added was 2% by mass with respect to the total mass. The conditions of mixing using the attritor were a peripheral speed of 250 m/min for 1.5 to 15 hours (1.5 hours for sample Nos. 1 to 3, 6, 7, and 103, 15 hours for sample Nos. 4, 5, 8, and 101, and 5 hours for sample No. 102). The solvent was volatilized from each base powder slurry to obtain a powder mixture.

### [Molding step]

The powder mixtures produced were filled into molds, and press molding was performed at a pressure of 98 MPa to produce green compacts. The shape of the green compacts was SNG432 in ISO standards.

### [Sintering step]

Each of the produced green compacts was sintered. Specifically, first, the green compact was heated to 370°C to remove the paraffin serving as the molding aid (the removing period). Then the green compact was increased in temperature to 1,200°C in a vacuum atmosphere (the first temperature increasing period). Then the green compact was increased in temperature to 1,500°C in a nitrogen atmosphere with a nitrogen partial pressure of 10.0 kPa (the second temperature increasing period), and the green compact was held in this state for 1 hour (the holding period). Then the resulting compact was cooled to 1,150°C in a vacuum atmosphere (the first cooling period) and then cooled under pressure in a nitrogen atmosphere to room temperature (the second cooling period) to thereby obtain a sintered body (cermet) (sample Nos. 1 to 8 and 101 to 103).

### [Compositions and structures of cermets]

A cross section of each of the samples obtained was examined using an SEM (JSM-7000F manufactured by JEOL Ltd.). An SEM photograph (5,000X) of the cermet of sample No. 1 is shown in Figure 1 as a representative example. As can be seen, particles including black particles surrounded entirely by gray regions (first hard phase particles), black particles (second hard phase particles), and gray particles (third hard phase particles) were present. It was also found the presence of the binder phase between these particles.

The composition of each of the particles was examined by an SEM-EDX system. The black particles were found to be composed substantially of TiCN. The gray particles were found to be composed of a complex carbonitride solid solution including Ti and W. The binder phase was found to be composed substantially of Co.

The contents of the elements with respect to the total amount of the cermet are equal to the contents of the elements in the powder mixture. Therefore, the content of Ti in sample No. 1 was about 50% by mass, and the content of W was about 18% by mass.

The composition and structure were examined for other cermet samples in the same manner as described above. In all the cermets, as in sample No. 1, the presence of the first hard phase, the second hard phase, and the third hard phase was found, and the presence of the binder phase between these hard phases was also found. Black particles included in hard phases were composed substantially of TiCN, and gray particles were composed of a complex carbonitride solid solution containing Ti and at least one of W, Mo, Ta, Nb, and Cr.

### [Size of hard phase particles]

For each of the cermet samples obtained, an SEM photograph (5,000X) and an image analyzer: Mac-VIEW (manufactured by Mountech Co., Ltd.) were used to obtain an observation field of view (33 µm × 25 µm) including at least 200 hard phase particles in a given cross section of the cermet, and the diameters of the hard phase particles in the observation field of view and the average particle diameter of the hard phase particles were determined. The diameter of each of the hard phase particles in the observation field of view was determined as follows. The horizontal Feret diameter and the vertical Feret diameter of each hard phase particle were measured, and the average of these Feret diameters was used as the diameter of the hard phase particle. The average diameter of the hard phase particles in the observation field of view was determined as follows. The averages of the Feret diameters of the hard phase particles were summed up, and the sum was divided by the number of measured hard phase particles. Then the number of hard phase particles having a particle diameter within ±30% of the average particle diameter of the hard phase particles (within the particle diameter setting range) was determined, and the number ratio of hard phase particles within the particle diameter setting range to all the hard phase particles was determined. The results of the average particle diameter of the hard phase particles and the number ratio of the hard phase particles within the particle diameter setting range to all the hard phase particles are also shown in Table 1.

### [Toughness and hardness of cermets]

For each of the obtained cermet samples, toughness (MPa·m^{1/2}) and Vickers hardness (GPa) were determined according to JIS R 1607 (1995) and JIS Z 2244 (2009), respectively. The results are also shown in Table 1.

**[Table 1]**

| Sample No. | Compositions of base powders (% by mass) | | | | | | | | | Standard deviation of TiCN powder (µm) | Diameter of hard phase particles (µm) | Ratio of hard phase particles within particle diameter setting range (%) | Toughness (MPa·m^{1/2}) | Hardness (GPa) |
|---|---|---|---|---|---|---|---|---|---|---|---|---|---|---|
| | TiCN | TiC | WC | MO₂C | NbC | TaC | Cr₃C₂ | Co | Ni | | | | | |
| 1 | 64 | 0 | 20 | 0 | 0 | 0 | 0 | 16 | 0 | 1.2 | 1.2 | 73 | 7.0 | 15.1 |
| 2 | 64 | 0 | 20 | 0 | 0 | 0 | 0 | 8 | 8 | 1.2 | 1.3 | 76 | 7.1 | 15.2 |
| 3 | 59 | 0 | 20 | 0 | 0 | 0 | 5 | 16 | 0 | 1.2 | 1.3 | 72 | 7.3 | 15.1 |
| 4 * | 57 | 0 | 20 | 7 | 0 | 0 | 0 | 16 | 0 | 0.3 | 0.8 | 77 | 6.6 | 15.7 |
| 5 ∗ | 61 | 6 | 17 | 0 | 0 | 0 | 0 | 8 | 8 | 0.3 | 0.7 | 71 | 6.5 | 15.8 |
| 6 | 57 | 0 | 20 | 0 | 7 | 0 | 0 | 8 | 8 | 1.2 | 1.5 | 72 | 7.2 | 15.3 |
| 7 | 57 | 0 | 20 | 0 | 0 | 7 | 0 | 8 | 8 | 1.2 | 1.5 | 77 | 7.2 | 14.9 |
| 8 * | 57 | 0 | 20 | 0 | 0 | 0 | 0 | 0 | 23 | 0.3 | 0.8 | 76 | 6.5 | 16.0 |
| 101 * | 64 | 0 | 20 | 0 | 0 | 0 | 0 | 16 | 0 | 3.2 | 0.7 | 51 | 6.0 | 14.2 |
| 102 * | 60 | 0 | 24 | 0 | 0 | 0 | 0 | 16 | 0 | 3.2 | 1.2 | 59 | 6.3 | 13.9 |
| 103 * | 67 | 0 | 17 | 0 | 0 | 0 | 0 | 8 | 8 | 3.2 | 2.2 | 44 | 4.9 | 12.5 |

| | | | | | | | | | | | | | | |
|---|---|---|---|---|---|---|---|---|---|---|---|---|---|---|
| * refers to comparative examples | | | | | | | | | | | | | | |

As can be seen in Table 1, in the cermets of sample Nos. 1 to 8 in which a TiCN powder having a standard deviation of 1.5 µm or less was used as a base powder, the ratio of the hard phase particles within ±30% of the average diameter of the hard phase particles (within the particle diameter setting range) to all the hard phase particles was 70% or more. Specifically, the hard phase particles in the cermet were substantially uniform in size.
This may be mainly because the base powder had a substantially uniform particle size and may also be because since heating was performed at a high nitrogen partial pressure during sintering, Ostwald ripening of the base powder (particles) was suppressed. In the cermets of sample Nos. 1 to 8, their hardness was high, i.e., about 15 GPa or more. This may be because the average particle diameter of the hard phase particles was small, i.e., 1.5 µm or less. Particularly, in the cermets of sample Nos. 1 to 3, 6 and 7 at least 70% of the hard phase particles had a particle diameter within the setting range. Specifically, the particle diameters of at least 70% of the hard phase particles were at most 1.95 µm, and the hard phase particles were uniform and fine. This may be the reason for the high hardness. Particularly, when the average particle diameter of the hard phase particles was less than 1.0 µm, the hardness was higher, i.e., 15.7 GPa or more. In the cermets of sample Nos. 1 to 8, the toughness was high, i.e., 6.5 MPa·m^{1/2} or more. This may be because the hard phase particles were substantially uniform in size.

### <Test example 2>

In test example 2, the influence of the sintering step on the composition, structure, particle size, toughness, and hardness of a cermet was examined. Specifically, the influence of the sintering temperature and the influence of the nitrogen partial pressure were examined.

Green compacts were obtained using the powder mixture used in sample No. 1 and then sintered at different sintering temperatures and nitrogen partial pressures in the second temperature increasing period to thereby produce sintered bodies (cermets) (sample Nos. 11 to 14 and 111 to 113), and the composition, structure, particle size, toughness, and hardness of each cermet were examined. The sintering temperatures and the nitrogen partial pressures in the second temperature increasing period are shown in Table 2. The other conditions (the removing period, the first temperature increasing period, the first cooling period, the second cooling period, etc.) are the same as those in test example 1.

A cross section of each of the cermet samples was examined in the same manner as in test example 1. The first hard phase, the second hard phase, the third hard phase, and the binder phase present between these hard phases were found in each cermet sample. In these hard phases, black particles were composed substantially of TiCN, and gray particles were composed of a complex carbonitride solid solution containing Ti and W.

For each of the cermet samples obtained, the particle diameters of the hard phase particles and the average particle diameter of the hard phase particles were determined in the same manner as in test example 1. Then the number of hard phase particles having a diameter within ±30% of the average particle diameter of the hard phase particles (within the particle diameter setting range) was determined, and the ratio of the hard phase particles within the particle diameter setting range to all the hard phase particles was determined. The results of the average particle diameter of the hard phase particles and the number ratio of the hard phase particles within the particle diameter setting range to all the hard phase particles are also shown in Table 2.

For each of the obtained cermet samples, toughness (MPa·m^{1/2}) and Vickers hardness (GPa) were determined in the same manner as in test example 1. The results are also shown in Table 2.

**[Table 2]**

| Sample No. | Sintering temperature (°C) | Nitrogen partial pressure (kPa) | Diameter of hard phase particles (µm) | Ratio of hard phase particles within particle diameter setting range (%) | Toughness (MPa·m1/2) | Hardness (GPa) |
|---|---|---|---|---|---|---|
| 11 | 1300 | 10 | 1.2 | 83 | 7.5 | 15.3 |
| 12 | 1300 | 5 | 1.2 | 78 | 7.3 | 15.1 |
| 13 | 1450 | 5 | 1.3 | 75 | 7.0 | 15.3 |
| 14 | 1500 | 5 | 1.2 | 71 | 6.8 | 15.2 |
| 111 * | 1500 | 1 | 1.4 | 67 | 6.3 | 14.8 |
| 112 * | 1400 | 1 | 1.4 | 65 | 6.0 | 14.0 |
| 113 * | 1600 | 10 | 1.7 | 63 | 6.0 | 14.8 |

As can be seen in Table 2, in the cermets of sample Nos. 11 to 14 in which heating at a sintering temperature of from 1,300°C to 1,500°C inclusive was performed in a nitrogen atmosphere with a nitrogen partial pressure of 5 kPa or more, the ratio of hard phase particles within ±30% of the average particle diameter of the hard phase particles to all the hard phase particles (within the particle diameter setting range) was 70% or more. Specifically, the hard phase particles in the cermet were substantially uniform in size. This may be because since the nitrogen partial pressure was high, i.e., 5 kPa or more, Ostwald ripening of the base powder (particles) during sintering was suppressed. In the cermets of sample Nos. 11 to 14, their hardness was high, i.e., about 15 GPa or more, and the toughness was high, i.e., 6.8 MPa·m^{1/2} or more.

In particular, in the cermet of sample No. 1 in which the nitrogen partial pressure was 10 kPa, the ratio of the hard phase particles within the particle diameter setting range to all the hard phase particles was as large as 83%. Particularly, the roughness was 7.5 MPa·m^{1/2} or more and was very high. This indicates that the higher the nitrogen partial pressure, the more the Ostwald ripening can be suppressed. In this case, the hard phase particles can be more uniform in size, and the toughness can be effectively improved.

In the cermets of sample Nos. 111 and 112 in which the nitrogen partial pressure was low, i.e., 1 kPa, the ratio of the hard phase particles within the particle diameter setting range to all the hard phase particles was low, i.e., 67% or less, and both the toughness and hardness were low, i.e., were 6.3 MPa·m^{1/2} or less and 14.8 GPa or less, respectively. This may be because since the nitrogen partial pressure was low, the Ostwald ripening of the base powder (particles) during sintering was not suppressed and the particle size distribution of the hard phase particles formed was not uniform. Since Ostwald ripening was not suppressed, large particles grew and formed coarse particles. The reduction in hardness may be due to the presence of the coarse hard phase particles. This indicates that even when the base powder itself has a substantially uniform particle size, Ostwald ripening of the hard phase particles occurs when the nitrogen partial pressure during sintering is low, so that it is difficult to make the hard phase particles substantially uniform in size. In the cermet of sample No. 113 in which the sintering temperature was high, i.e., 1,600°C, the ratio of the hard phase particles within the particle diameter setting range to all the hard phase particles was small, i.e., 63%, and both the toughness and hardness were low, i.e., were 6.0 MPa·m^{1/2} and 14.8 GPa, respectively. This may be because, since the sintering temperature was high, the growth of the base powder (particles) during sintering could not be suppressed. In this case, the formed hard phase particles had a non-uniform particle size distribution.

### <Test example 3>

Cutting tools were produced using some of the samples obtained in test examples 1 and 2 above. The cutting tools produced were used to actually perform a cutting test. The cutting test is a fracture resistance test.

Each of the cermets of sample Nos. 1, 4, 11, 14, 101, 103, and 111 was subjected to surface polishing treatment and cutting edge treatment to produce an indexable insert (cutting tool) having an SNG432 shape.

Each of the obtained cutting tools was used for intermittent turning of an S35C workpiece having four flutes under wet conditions at a cutting speed of 300 m/min, a feed rate of 0.2 mm/rev, and a depth of cut of 1.5 mm, and the number of impacts until the cutting tool was fractured was measured to evaluate fracture resistance. The results are shown in Table 3.

**[Table 3]**

| Sample No. | Number of impacts |
|---|---|
| 1 | 7695 |
| 4* | 6843 |
| 11 | 9912 |
| 14 | 8367 |
| 101 | 3569 |
| 103 | 2027 |
| 111 | 4441 |

As can be seen on Table 3, in sample Nos. 1, 11, and 14 in which the ratio of the hard phase particles within ±30% of the average particle diameter of the hard phase particles (within the particle diameter setting range) to all the hard phase particles was 70% or more, the number of impacts was high, i.e., 6,800 or more, and excellent fracture resistance was obtained. This may be because since the hard phase particles in the cermet were substantially uniform in size, concentration of stress on the hard phase particles was mitigated and the formation of fracture origins during fracture could be reduced.

### <Test example 4>

Cermets of samples 21 to 25 were produced through the preparing step, the mixing step, the molding step, and the sintering step, and the sintering step in this order in the same manner as in test example 1. For each of the cermets, its transverse rupture strength and cutting performance (fracture probability) during cutting using the cermet were examined.

### [Samples 21 to 25]

### [Preparing step]

TiCN powders having average particle diameters and standard deviations shown in Table 4 were prepared as first hard phase base powders. The TiCN powders in samples 21 to 25 were produced and prepared as follows. To produce the TiCN powder in samples 21 to 23, a Ti oxide powder having an average particle diameter of 1.2 µm and a standard deviation of 1.2 µm and a carbon powder were mixed, and the powder mixture was subjected to heat treatment in a nitrogen atmosphere at 1,700°C for 1 hour. The TiCN powder in samples 24 and 25 was produced in the same manner as in sample 21 except that the Ti oxide powder used had an average particle diameter of 0.7 µm and a standard deviation of 0.3 µm. Second hard phase base powders and binder phase base powders of the same types and with the same average particle diameters as those in test example 1 were prepared.

### [Mixing step]

In the mixing step, powders were mixed at a mass ratio shown in Table 4 in the same manner as in test example 1 except that the mixing conditions in the attritor were changed to a peripheral speed of 250 m/min for 5 hours.

### [Molding step]

In the molding step, green compacts having the same shape as in test example 1 were produced in the same manner as in test example 1.

### [Sintering step]

In the sintering step, sintered bodies (cermets) (samples 21 to 25) were obtained in the same manner as in test example 1 except that, in the second temperature increasing period, the green compacts were increased in temperature to 1,450°C in a nitrogen atmosphere with a nitrogen partial pressure of 5.0 kPa.

### [Samples 211 and 212]

Samples 211 and 212 are different from sample 21 mainly in that a TiCN powder having a standard deviation of more than 1.5 µm (2.5 µm in this case) was used as shown in Table 4. The TiCN powder in samples 211 and 212 was produced in the same manner as in sample 21 except that the Ti oxide powder had an average particle diameter of 2.7 µm and a standard deviation of 2.5 µm.

### [Sample 213]

Sample 213 is different from sample 21 mainly in that a TiCN powder having a standard deviation of more than 1.5 µm (2.1 µm in this case) was used as shown in Table 4 and that Co and Ni were contained in a total amount of 0.1 to 0.3% by mass with respect to the TiCN powder. To produce the TiCN powder in sample 213, a Ti oxide powder having an average particle diameter of 1.8 µm and a standard deviation of 2.1 µm and a carbon powder were mixed, and Co and Ni were added such that the total amount of Co and Ni with respect to the TiCN powder to be obtained was 0.1 to 0.3% by mass. Then the mixture was subjected to heat treatment in a nitrogen atmosphere at 1,700°C for 0.5 hours.

### [Samples 221 to 223]

Samples 221 to 223 are different from sample 21 mainly in that the starting material of the TiCN powder was not the Ti oxide but a Ti hydroxide powder and that the standard deviation of the particle size distribution of the TiCN powder was more than 1.5 µm (3.2 µm in this case) as shown in Table 4. To produce the TiCN powder in samples 221 to 223, the Ti hydroxide powder having an average particle diameter of 1.4 µm and a standard deviation of 3.2 µm and a carbon powder were mixed, and the mixture was subjected to heat treatment in a nitrogen atmosphere at 1,700°C for 0.5 hours.

### [Measurement of transverse rupture strength]

For each of samples 21 to 25, 211 to 213, and 221 to 223, the transverse rupture strength of the cermet was measured. For each sample, 8 cermet pieces were prepared, and the average transverse rupture strength of the 8 pieces and the standard deviation of the transverse rupture strength were measured. The results are shown in Table 1. The measurement of the transverse rupture strength was performed according to JIS R 1601(2008) "Testing method for flexural strength (modulus of rupture) of fine ceramics at room temperature."

**[Table 4]**

| Sample | Compositions of base powders (% by mass) | | | | | | | | Average particle diameter of TiCN powder | Standard deviation of TiCN powder | Average transverse rupture strength | Standard deviation of transverse rupture strength |
|---|---|---|---|---|---|---|---|---|---|---|---|---|
| | TiCN | WC | Mo₂C | NbC | TaC | Cr₃C₂ | Co | Ni | µm | um | GPa | GPa |
| 21 | 64.0 | 20.0 | 0.0 | 0.0 | 0.0 | 0.0 | 8.0 | 8.0 | 1.2 | 1.2 | 2.4 | 0.08 |
| 22 | 57.0 | 20.0 | 7.0 | 0.0 | 0.0 | 0.0 | 16.0 | 0.0 | 1.2 | 1.2 | 2.2 | 0.11 |
| 23 | 57.0 | 20.0 | 0.0 | 7.0 | 0.0 | 0.0 | 8.0 | 8.0 | 1.2 | 1.2 | 2.3 | 0.14 |
| 24 | 57.0 | 20.0 | 0.0 | 0.0 | 7.0 | 0.0 | 8.0 | 8.0 | 0.7 | 0.3 | 2.5 | 0.09 |
| 25 | 59.0 | 20.0 | 0.0 | 0.0 | 0.0 | 5.0 | 16.0 | 0.0 | 0.7 | 0.3 | 2.4 | 0.10 |
| 211* | 64.0 | 20.0 | 0.0 | 0.0 | 0.0 | 0.0 | 8.0 | 8.0 | 2.7 | 2.5 | 2.0 | 0.23 |
| 212* | 57.0 | 20.0 | 7.0 | 0.0 | 0.0 | 0.0 | 16.0 | 0.0 | 2.7 | 2.5 | 2.0 | 0.25 |
| 213* | 64.0 | 20.0 | 0.0 | 0.0 | 0.0 | 0.0 | 8.0 | 8.0 | 1.8 | 2.1 | 2.1 | 0.20 |
| 221* | 64.0 | 20.0 | 0.0 | 0.0 | 0.0 | 0.0 | 8.0 | 8.0 | 1.4 | 3.2 | 1.9 | 0.27 |
| 222* | 64.0 | 20.0 | 0.0 | 0.0 | 0.0 | 0.0 | 8.0 | 8.0 | 1.4 | 3.2 | 1.8 | 0.28 |
| 223* | 57.0 | 20.0 | 7.0 | 0.0 | 0.0 | 0.0 | 16.0 | 0.0 | 1.4 | 3.2 | 1.6 | 0.33 |

As shown in Table 4, the average transverse rupture strength in each of samples 21 to 25 was 2.2 GPa or more and was higher than those in samples 211 to 213 and 221 to 223. The standard deviation of the transverse rupture strength in each of samples 21 to 25 was less than 0.20 GPa and specifically 0.15 GPa or less and was smaller than those in samples 211 to 213 and 221 to 223. This shows that the use of a TiCN powder produced using Ti oxide as a starting material, having an average particle diameter of from 0.5 µm to 5.0 µm inclusive and specifically 3.0 µm or less, and having a particle size distribution with a standard deviation of 1.5 µm or less allows production of a cermet that gives a high average value of transverse rupture strength and small product-to-product variations in transverse rupture strength.

### [Cutting test]

Cutting tools using the cermets of the samples as substrates were produced, and each of the produced cutting tools was used to perform a cutting test. The cermet was ground (surface-polished) and then subjected to cutting edge treatment to thereby obtain an insert. The insert was fixed to an end of a tool body to thereby obtain a cutting tool. The cutting tool obtained was used to perform intermittent cutting under the conditions shown in Table 5, and cutting performance was examined. In this test, the fracture probability ((the number of fractured inserts / 8) × 100) was determined as the cutting performance to evaluate the product-to-product variations in fracture resistance. The results are shown in Table 6.

**[Table 5]**

| Cutting conditions | |
|---|---|
| Workpiece | S45C-fluted material (number of flutes: 4) |
| Cutting speed Vc (m/min) | 100 |
| Feed f (mm/rev) | 0.25 |
| Depth of cut ap (mm) | 1.5 |
| Cutting environment | DRY |
| Evaluation method | Fracture probability (breakage rate) N=8 |

**[Table 6]**

| Sample | Fracture probability (%) |
|---|---|
| 21 | 12.5 |
| 22 | 18.8 |
| 23 | 12.5 |
| 24 | 18.8 |
| 25 | 0.0 |
| 211 | 43.8 |
| 212 | 43.8 |
| 213 | 34.4 |
| 221 | 43.8 |
| 222 | 59.4 |
| 223 | 68.8 |

As shown in Table 6, in each of samples 21 to 25, the fracture probability was 30% or lower and specifically 20% or lower and was much lower than those in samples 211 to 213 and 221 to 223. This shows that when a TiCN powder produced using Ti oxide as a starting material, having an average particle diameter of from 0.5 µm to 5.0 µm inclusive and specifically 3.0 µm or less, and having a particle size distribution with a standard deviation of 1.5 µm or less is used for the substrate of a cutting tool, unexpected fracture can be suppressed, and product-to-product variations in fracture resistance can be reduced.

### Industrial Applicability

The cermet of the present invention can be preferably used as the substrate of a cutting tool. The cermet production method of the present invention can be preferably used to produce a cermet suitable for the substrate of a cutting tool. The cutting tool of the present invention can be preferably used not only for continuous cutting but also intermittent cutting.

## Claims

1. A cermet comprising a hard phase containing Ti and a binder phase containing at least one of Ni and Co and binding the hard phase,
wherein, in an observation field of view containing at least 200 hard phase particles in any given cross section of the cermet,
at least 70% by number of the hard phase particles present in the observation field of view have a particle diameter within ±30% of the average particle diameter of the hard phase particles, and
wherein the average particle diameter of the hard phase particles is from 1.0 µm to 1.5 µm inclusive, the average particle diameter measured by measuring the horizontal Feret diameter and vertical Feret diameter of each of the hard phase particles in the observation field of view, summing up the averages of the Feret diameters and dividing by the number of measured hard phase particles.

2. The cermet according to claim 1, wherein the hard phase includes a first hard phase, a second hard phase, and a third hard phase,
the first hard phase being a hard phase having a cored structure including a core portion and a peripheral portion surrounding the entire circumference of the core portion, the core portion being composed mainly of at least one of TiC, TiN, and TiCN, the peripheral portion being composed of a complex compound solid solution containing Ti and at least one of W, Mo, Ta, Nb, and Cr,
the second hard phase being a hard phase having a single phase structure composed mainly of at least one of TiC, TiN, and TiCN,
the third hard phase being a hard phase having a single phase structure composed of the complex compound solid solution.

3. A cutting tool comprising the cermet according to claim 1 or claim 2, the cermet being used as a substrate.

4. The cutting tool according to claim 3, further comprising a hard film covering at least part of the surface of the substrate.

5. A method for producing a cermet according to any preceding claim, the method comprising:
a preparing step of preparing a first hard phase base powder containing at least one of Ti carbide, Ti nitride, and Ti carbonitride, a second hard phase base powder containing at least one selected from W, Mo, Ta, Nb, and Cr, and a binder phase base powder containing at least one of Co and Ni;
a mixing step of mixing the first hard phase base powder, the second hard phase base powder, and the binder phase base powder using an attritor to thereby produce a powder mixture;
a molding step of molding the powder mixture to produce a green compact; and
a sintering step of sintering the green compact;
wherein:
the first hard phase base powder is prepared using Ti oxide as a starting material, has an average particle diameter of from 0.5 µm to 5.0 µm inclusive as determined by the Fisher method, and has a particle size distribution with a standard deviation of 1.5 µm or less; and
in the sintering step, the green compact is heated to from 1,300°C to 1,500°C inclusive in a nitrogen atmosphere with a nitrogen partial pressure of from 5.0 kPa to 10.0 kPa inclusive.

## Patentansprüche

1. Cermet, umfassend eine harte Phase, welche Ti enthält, und eine Bindemittelphase, welche mindestens eines aus Ni und Co enthält und die harte Phase bindet,
wobei in einem Beobachtungsfeld, das mindestens 200 Hartphasenpartikel in einem beliebigen Querschnitt des Cermets enthält,
mindestens 70 % in Bezug auf die Anzahl der in dem Beobachtungsfeld vorhandenen Hartphasenpartikel einem Partikeldurchmesser innerhalb von ±30 % der durchschnittlichen Partikeldurchmesser der Hartphasenpartikel aufweisen, und
wobei der durchschnittliche Partikeldurchmesser der Hartphasenpartikel von 1,0 µm bis einschließlich 1,5 µm beträgt, der durchschnittliche Partikeldurchmesser durch Messen des horizontalen Feret-Durchmessers und vertikalen Feret-Durchmessers jedes der Hartphasenpartikel in dem Beobachtungsfeld, Summieren der Durchschnittswerte der Feret-Durchmesser und Dividieren durch die Anzahl der gemessenen Hartphasenpartikel, gemessen wird.

2. Cermet nach Anspruch 1, wobei die harte Phase eine erste harte Phase, eine zweite harte Phase und eine dritte harte Phase umfasst,
die erste harte Phase eine harte Phase mit einer Kernstruktur ist, die einen Kernabschnitt und einen den ganzen Umfang des Kernabschnittes umgebenden Umfangsabschnitt enthält, der Kernabschnitt aus einer komplexen Mischkristalllösung besteht, welche Ti und mindestens eines aus W, Mo, Ta, Nb und Cr enthält,
die zweite harte Phase eine harte Phase mit einer Einphasenstruktur ist, welche hauptsächlich aus mindestens einem aus TiC, TiN und TiCN besteht,
die dritte harte Phase eine harte Phase mit einer Einphasenstruktur ist, welche aus der komplexen Mischkristalllösung besteht.

3. Schneidwerkzeug umfassend das Cermet nach Anspruch 1 und Aspruch 2, wobei das Cermet als ein Substrat verwendet wird.

4. Schneidwerkzeug nach Anspruch 3, des Weiteren umfassend einen harten Film, welcher mindestens einen Teil der Oberfläche des Substrats bedeckt.

5. Verfahren zur Herstellung eines Cermets nach einem der vorangehenden Ansprüche, wobei das Verfahren umfasst,
einen Vorbereitungsschritt zur Herstellung eines ersten Hartphasenbasispulvers, das mindestens eines aus Ti-Carbid, Ti-Nitrid und Ti-Carbinitrid enthält, eines zweiten Hartphasenbasispulvers, dass mindestens eines gewählt aus W, Mo, Ta, Nb und Cr enthält und eines Bindemittelphasenbasispulvers, welches mindestens eines aus Co und Ni enthält;
einen Mischschritt zum Mischen des ersten Hartphasenbasispulvers, des zweiten Hartphasenbasispulvers und des Bindemittelphasenbasispulvers unter Verwendung eines Attritors, um dadurch eine Pulvermischung herzustellen;
einen Formschritt zum Formen der Pulvermischung, um einen Grünkörper herzustellen; und einen Sinterschritt zum Sintern des Grünkörpers;
wobei:
das erste Hartphasenbasispulver unter Verwendung von Ti-Oxid als ein Ausgangsmaterial hergestellt wird, mit einem durchschnittlichen Partikeldurchmesser von 0,5 µm bis einschließlich 5,0 µm; bestimmt durch das Fisher-Verfahren, und mit einer Partikelgrößenverteilung mit einer Standardabweichung von 1,5 µm oder weniger; und
der Grünkörper in dem Sinterschritt von 1300 °C bis einschließlich 1500 °C in einer Stickstoffatmosphäre erwärmt wird, mit einem Stickstoffpartialdruck von 5,0 kPa bis einschließlich 10,0 kPa.

## Revendications

1. Cermet comprenant une phase dure contenant Ti et une phase de liant contenant au moins un de Ni et Co et liant la phase dure,
dans lequel, dans un champ visuel d'observation contenant au moins 200 particules de phase dure dans toute section transversale donnée du cermet,
au moins 70 % en nombre des particules de phase dure présentes dans le champ visuel d'observation présentent un diamètre de particule dans les ± 30 % du diamètre moyen de particule des particules de phase dure, et
dans lequel le diamètre moyen de particule des particules de phase dure est de 1,0 µm à 1,5 µm inclus, le diamètre moyen de particule étant mesuré en mesurant les diamètre Feret horizontal et diamètre Feret vertical de chacune des particules de phase dure dans le champ visuel d'observation, en additionnant les moyennes des diamètres Feret et en divisant par le nombre des particules de phase dure mesurées.

2. Cermet selon la revendication 1, dans lequel la phase dure comprend une première phase dure, une seconde phase dure, et une troisième phase dure,
la première phase dure étant une phase dure ayant une structure à noyau comprenant une portion de noyau et une portion périphérique entourant la circonférence entière de la portion de noyau, la portion de noyau étant principalement composée d'au moins un de TiC, TiN, et TiCN, la portion périphérique étant composée d'une solution solide de composé complexe contenant Ti et au moins un de W, Mo, Ta, Nb, et Cr,
la seconde phase dure étant une phase dure ayant une structure de phase unique composée principalement d'au moins un de TiC, TiN, et TiCN,
la troisième phase dure étant une phase dure présentant une structure de phase unique composée de la solution solide de composé complexe.

3. Outil de coupe comprenant le cermet selon la revendication 1 ou la revendication 2, le cermet étant utilisé comme un substrat.

4. Outil de coupe selon la revendication 3, comprenant de plus un film dur couvrant au moins une partie de la surface du substrat.

5. Procédé de production d'un cermet selon l'une quelconque des revendications précédentes, le procédé comprenant :
une étape de préparation pour préparer une première poudre de base de phase dure contenant au moins un de carbure de Ti, nitrure de Ti, et carbonitrure de Ti, une seconde poudre de base de phase dure contenant au moins un choisi parmi W, Mo, Ta, Nb, et Cr, et une poudre de base de phase de liant contenant au moins un de Co et Ni ;
une étape de mélange pour mélanger la première poudre de base de phase dure, la seconde poudre de base de phase dure et la poudre de base de phase de liant en utilisant un dispositif d'attrition pour ainsi produire un mélange de poudres ;
une étape de moulage pour mouler le mélange de poudres pour produire un compact à l'état vert ; et
une étape de frittage pour fritter le compact à l'état vert ;
dans lequel :
la première poudre de base de phase dure est préparée en utilisant de l'oxyde de Ti comme matériau de départ, présente un diamètre moyen de particule de 0,5 µm à 5,0 µm inclus comme déterminé par la méthode Fisher, et présente une distribution de taille de particule avec un écart type de 1,5 µm ou inférieur ; et
dans l'étape de frittage, le compact à l'état vert est chauffé à de 1 300°C à 1 500°C inclus dans une atmosphère d'azote avec une pression partielle d'azote de 5,0 kPa à 10,0 kPa inclus.
